(19) Europäisches Patentamt
European Patent Office
Office européen des brevets

(11) Publication number: **0 047 624**
**B1**

(12) **EUROPEAN PATENT SPECIFICATION**

(45) Date of publication of patent specification: **12.12.84**

(51) Int. Cl.$^3$: **C 01 G 43/01**, C 01 G 56/00, B 01 J 8/26, G 21 C 3/42

(21) Application number: **81303988.0**

(22) Date of filing: **01.09.81**

(54) **Reactor and method for preparing uranium trioxide and/or plutonium oxide.**

(30) Priority: **02.09.80 JP 120693/80**

(43) Date of publication of application:
**17.03.82 Bulletin 82/11**

(45) Publication of the grant of the patent:
**12.12.84 Bulletin 84/50**

(84) Designated Contracting States:
**BE DE FR GB**

(56) References cited:
**DE-A-2 139 465**
**FR-A-1 323 272**
**GB-A- 715 354**
**US-A-2 755 853**
**US-A-2 981 592**

**CHEMICAL ABSTRACTS, vol. 70, no. 16, 1969, page 89, abstract 69645b, COLUMBUS, OHIO (US) A.R. OTERO et al.: "Fluidized-bed calcination of uranyl nitrate solutions"**
**CHEMCIAL ABSTRACTS, vol. 92, no. 20, May 1980, page 113, abstract 165851r, COLUMBUS, OHIO (US)**

(73) Proprietor: **MITSUI PETROCHEMICAL INDUSTRIES, LTD.**
**2-5, Kasumigaseki 3-chome Chiyoda-ku**
**Tokyo 100 (JP)**

(72) Inventor: **Ueda, Kimio**
**36-12, Nishihara 3-chome**
**Shibuya-ku Tokyo (JP)**

(74) Representative: **Armitage, Ian Michael et al**
**MEWBURN ELLIS & CO. 2/3 Cursitor Street**
**London EC4A 1BQ (GB)**

(56) References cited:
**CHEMICAL ABSTRACTS, vol. 92, no. 18, May 1980, page 154, abstract 149353z, COLUMBUS, OHIO (US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 047 624 B1

## Description

The present invention relates to a reactor for preparing uranium trioxide and/or plutonium oxide and particularly to a fluidized-bed reactor for the continuous preparation of uranium trioxide.

Usually in a nuclear reactor using enriched uranium as a nuclear fuel, uranium is separated from used nuclear fuel after removing fission products and plutonium and used again for the nuclear fuel. In this case, uranium is separated usually as uranyl nitrate, so as process to prepare uranium trioxide from uranyl nitrate is necessary.

For preparing uranium trioxide, a precipitation method and a direct denitration method are usual. The present invention relates to the latter method.

The precipitation method comprises adding ammonia to uranyl nitrate aqueous solution, precipitating ammonium diuranate, and baking the precipitate to give powder of uranium trioxide. Though this method has the benefit of easily eliminating impurities in the residual solution, it has drawbacks such as difficulty in establishing precipitation conditions, safety as a process, generation of much effluent comprising ammonium nitrate, and difficulties in treating this effluent.

On the other hand, the direct denitration method comprises directly heating uranyl nitrate aqueous solution, condensing it by evaporation of water and decomposing it to give uranium trioxide powder, wherein the main reactions appear to be as follows:

$$[(UO_2)\ (NO_3)_2 \cdot 3\tfrac{1}{2}H_2O] \xrightarrow{170°C} [(UO_2)\ (NO_3)_2 2H_2O] + 1\tfrac{1}{2}H_2O$$

$$[(UO_2)\ (NO_3)_2 \cdot 2H_2O] \xrightarrow{250\text{—}270°C} UO_3 + 2NO_2 + 2H_2O + \tfrac{1}{2}O_2$$

The direct denitration method has benefits of such as comparative simplicity of handling and of reactor compared with the precipitation method, since it involves a thermal decomposition reaction; and there is also little effluent because additives are not used. Though impurities remain in the powder, we can reduce impurities by purifying the uranyl nitrate raw material.

Further in the direct denitration method, a fluidized-bed reactor has often been used because of the simplicity of the reactor, the small amount of effluent, its safety on account of little local heating and cooling, uniform quality or uranium trioxide powder, stability of the process on account of good mixing, and the like.

However, in practical running of this reactor, it is hard to execute, because of cake generation in the openings supplying uranyl nitrate aqueous solution, and large particles caused by cake also prevent good fluidity. Further, achieving the proper structure of the fluidized-bed and stable operation is hard on account of the limitation of the critical safety shape. Because of such defects, long running is difficult, the efficiency in preparing uranium trioxide is insufficient, and the operating conditions become worse.

So, as a result of many and diligent experiments, the present inventor developed a new improved fluidized-bed reactor having a rectangular shape enabling long and safe running of the reactor possible in preparing uranium trioxide, to give higher efficiency and to improve the operating conditions. The invention can also be applied to the thermal decomposition of plutonium nitrate to plutonium oxide.

In the present invention uranyl nitrate and/or plutonium nitrate aqueous solution is fed into the fluidized-bed reaction, heated, and decomposed. Uranium trioxide and/or plutonium oxide powder is prepared by denitration reaction and is taken from the reactor. The fluidized-bed reactor is characterized by having (a) a rectangular parallelepipedic (possibly cubic) shaped bed which satisfies the critical safety shape of $^{235}U$ and/or plutonium, (b) a plurality of holes to supply nitrate aqueous solution into the fluidized-bed, (c) two or more reaction chambers divided by a barrage or barrages, the bottoms of which are movable to control their distance from the floor of the fluidized-bed, and an arrangement by which oxide powder is taken out mainly by overflow from the top of a said barrage through at least two reaction chambers, (d) heating means inside and outside the fluidized-bed, and (e) a head structure of upwardly divergent V-shaped form.

The reactor of the present invention is capable of providing good fluidity, little lack of uniformity of heat, high safety, good continuous operation, the possibility of handling large quantities, high efficiency, and ease of cleaning the inside; and yet it can be comparatively easily manufactured.

In the accompanying drawings:

Fig. 1 is a side view showing the principal parts of one embodiment of the invention; and

Fig. 2 is a side view at right-angles to that of Fig. 1.

Referring to the drawings, uranyl nitrate aqueous solution delivered for concentration and denitration, is fed to a fluidized-bed from holes 3 in a concentrated region (fluidized-bed) 1 of the fluidized-bed reactor and/or from holes 5 in a diluted region (upper area of fluidized-bed) 4 of said reactor, in a concentration of 1200 gU/l, with hot air at about 150°C, after concentration by evaporation. By supplying from many holes, preferably in spray nozzle form, more stable fluidized conditions can be obtained, because local cooling caused by excessive absorption of heat can be avoided, and also the generation of cake near the supply

holes and the generation of big particles thereby can be prevented. Further, by providing supply holes both in concentrated and diluted regions, it becomes easy to control the fluidized condition, and powder sticking to the upper wall of the reactor decreases to give good heat transfer. Hot air under pressure at about 370°C (arrow A) is blown into the bottom of the reactor and passes through dispersion plate 6 made of sintered metal, fluidized-bed 1, and filter 7 of sintered metal, and is then discharged from upper part of the reactor. The hot air heats the uranyl nitrate aqueous solution and thermally decomposes uranyl nitrate at about 150—300°C to give uranium trioxide.

The fluidized-bed 1 is divided into two or more reaction chambers 10, 11, etc. by barrages 8, 9, etc. Fluidized particles 12 are taken off (arrow B) mainly by overflow over the upper ends of barrages from the reaction chambers. The barrages are positioned in order to obtain optimum fluidized conditions and to avoid problems of caking, etc. That is, to obtain optimum fluidized conditions, it is necessary to maintain optimum height of the fluidized-bed in running. As this optimum height of fluidized-bed varies according to the width of the fluidized-bed and the sizes of the particles, it is necessary to position the barrages to maintain strictly the optimum height of the fluidized-bed. The lower ends of barrages can be lifted and the distance between the lower ends of the barrages and the floor of the reaction chambers (or the reactor) can be controlled. The barrages themselves can be moved up and down or the barrages can also be provided with auxiliary plates at their lower ends which can be moved up and down relative to the main barrages while maintaining a constant level for the upper ends of the barrages. By passing through two or more reaction chambers, the reaction goes to completion. Further, by taking the uranium trioxide by overflow clogging of the outlet can be prevented. Also, for the reason that the lower ends of the barrages can be lifted and distance between the lower ends of the barrages and the floor of the reaction chambers controlled, big particles 13 generated inevitably in the fluidized-bed can be taken off under the barrages by raising them (8′ and 9′ indicate the state where barrages 8 and 9 are raised), so accumulation of large particles can also be prevented. Reaction chambers can be easily cleaned as required by the above described mechanism of the barrages. Thermal decomposition reaction in the fluidized-bed needs a sufficient supply and uniform distribution of heat. For this purpose, hot air is introduced into the bottom of the reactor. In addition, a jacket 14 is provided outside the reactor into which is introduced, for example, a heating medium or hot air.

By using a neutron absorber such as a boron compound especially a fibrous boron compound including condensed $B^{10}$ as a heat insulator for the heater inside or outside, the shape of the reactor can be decided more easily in relation to the critical safety shape (that is, the tolerance of the critical safety shape and safety of the operation can be improved). So, it is preferable to use said neutron absorber as a heat insulator.

In addition, at least one assistant heater 15 is provided inside the fluidized-bed. The kind and shape of assistant heater 15 is not critical. However, a shape which does not prevent fluidity, such as a streamlined panel is preferable. The provision of assistant heater 15 gives void effect to critical safety shape of $^{235}U$ as described below. It also gives increased safety and allows increased production. The critical safety shape of $^{235}U$ prescribes so-called critical amounts for many nuclear fuels which are permitted to be stored in bulk according to their geometrical shape. It is necessary for bulk radio-active substances not to produce a chain reaction in order to remain safe.

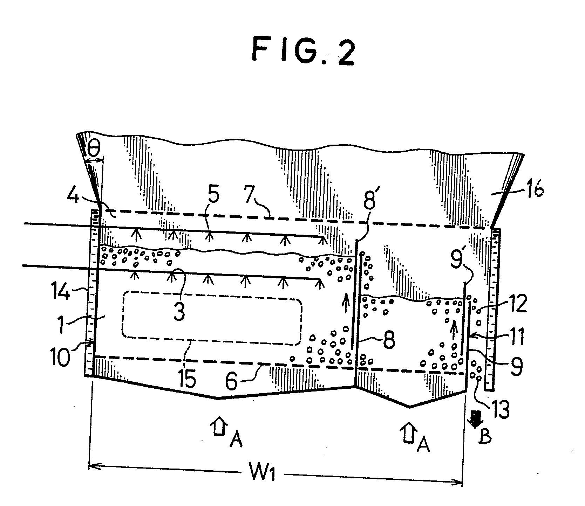

Generally speaking, many cylindrical reactors are used for fluidized-bed reactors, but if such a cylindrical reactor is used in the reaction of the present reaction, the necessary height of the fluidized-bed to attain stable fluidity cannot be achieved on account of the limitation of this critical safety shape, and also slugging is apt to occur. On the other hand, as the fluidized-bed of the reactor of the present invention is shaped in the form of a rectangular parallelepiped as shown in Figs. 1 and 2 (and may be for example a cube), a large volume for the fluidized-bed can be designed which still satisfies the critical safety shape, if the fluidized-bed has the width of a theoretically endless plane. For example, if the fluidized-bed (thickened area) having a length ($W_1$) of 1900—2100 mm, a width ($W_2$) of 150—300 mm and a height (L) of 300—600 mm is used, it conforms to the critical safety shape and can maintain a stable fluidized condition, so slugging does not easily occur. Preferably $W_1 \geq W_2$ or L.

The reactor has an upwardly divergent V-shaped structure 16 at its upper part to maintain a proper air velocity. The angle of the V-shape ($\theta$) is less than or equal to 25°, preferably 20°, which prevents accumulation of powder, makes it possible to operate without providing means for preventing powder accumulation such as scraper or the like. Also the reactor of the present invention can be applied to the process of synthesizing plutonium oxide from plutonium nitrate by denitration or synthesizing plutonium oxide and uranium oxide from the mixtures of plutonium nitrate and uranyl nitrate by denitration.

**Claims**

1. A fluidized-bed reactor for preparing uranium trioxide or plutonium oxide by charging uranyl nitrate and/or plutonium nitrate aqueous solution into the fluidized-bed reactor,

decomposing by heating to give uranium trioxide and/or plutonium oxide powder and discharging the oxide from the reactor, the reactor characterized by having (a) a rectangular parallelepipedic shaped ($W_1$, $W_2$ L) bed (1) which satisfies the critical safety shape of $^{235}U$ and/or plutonium, (b) a plurality of holes (3,5) for supplying the nitrate aqueous solution into the reactor, (c) at least two reaction chambers (10, 11) divided by one or more barrages (8, 9) the bottoms of which are movable to control their distance from the floor and an arrangement whereby the oxide powder is taken out mainly by overflow (12) over the top of a said barrage through at least two reaction chambers, (d) heating means (A, 14, 15) inside and outside the fluidized-bed, and (e) a gas discharge head structure (16) of upwardly divergent V-shaped form.

2. A fluidized-bed reactor according to claim 1 having a plurality of holes (3, 5) for supplying nitrate aqueous solution in both a concentrated region (1) and a diluted region (4) of the fluidized-bed reactor.

3. A fluidized-bed reactor according to claim 2 wherein said plurality of holes (3, 5) are in spray nozzle form.

4. A fluidized-bed reactor according to any one of claims 1, 2 and 3 wherein the angle ($\theta$) of V-shape is 25° or less.

5. A fluidized-bed reactor according to any one of the preceding claims wherein a neutron absorbing material is used as a thermal insulator for a said heating means.

6. A fluidized-bed reactor according to claim 5 wherein the neutron absorbing material comprises a fibrous boron compound including condensed $B^{10}$.

7. A fluidized-bed reactor according to any one of the preceding claims wherein the barrages (8, 9) are provided with auxiliary plates at their lower ends which can be raised or lowered whereby the level of the bottoms of the barrages can be varied while maintaining the levels of their upper ends constant.

8. A method of preparing uranium trioxide and/or plutonium oxide characterized by (i) introducing an aqueous solution of uranium nitrate and/or plutonium nitrate into a fluidized-bed reactor (1) through a plurality of supply holes (3 and/or 5), the fluidized-bed being of rectangular parallelepipedic shape satisfying the critical safety shape of $^{235}$uranium and/or plutonium, the reactor having two or more reaction chambers (10, 11) divided by barrages (8, 9) the lower ends of which are movable to control their level; (ii) supplying heat to the fluidized-bed to decompose the nitrate from external and internal sources (A, 14, 15) including hot air (A) passed upwardly through the fluized-bed; and (iii) passing the oxide particles from one reaction chamber to the next and finally out of the reactor by overflow over the barrages (8, 9).

9. A method according to claim 8 wherein uranium trioxide is produced.

**Patentansprüche**

1. Fließbett-Reaktor zur Herstellung von Urantrioxid oder Plutoniumoxid durch Einbringen wässriger Uranylnitrat- und/oder Plutoniumnitrat-Lösung in den Fließbett-Reaktor, Zersetzen durch Erhitzen zu Urantrioxid- und/oder Plutoniumoxid-Pulver und Ausbringen des Oxids aus dem Reaktor, der Reaktor dadurch gekennzeichnet, daß er (a) ein rechtwinkliges, parallelepipedisch geformtes ($W_1$, $W_2$, L) Bett (1), das der kritischen Sicherheitsform von $^{235}U$ und/oder Plutonium genügt, (b) eine Anzahl Löcher (3,5) zum Zuführen der wässrigen Nitrat-Lösung zum Reaktor, (c) wenigstens zwei Reaktionskammern (10, 11), unterteilt durch eine oder mahr Absperrungen (8, 9), deren Böden zur Steuerung ihres Abstands von Boden bewegbar sind, und eine Anordnung, durch die das Oxidpulver hauptsächlich durch Überlauf (12) über das Oberteil der Absperrung durch wenigstens zwei Reaktionskammern ausgebracht wird, (d) Heizeinrichtungen (A, 14, 15) innerhalb des Fließbettes und (e) eine aufgesetzte Gasablaßstruktur (16) von nach oben divergierender V-Form aufweist.

2. Fließbett-Reaktornach Anspruch 1 mit einer Anzahl von Löchern (3, 5) zum Zuführen von wässriger Nitratlösung sowohl in einen konzentrierten Bereich (1) als auch einen verdünnten Bereich (4) des Fließbett-Reaktors.

3. Fließbett-Reaktor nach Anspruch 2, worin die Anzahl von Löchern (3, 5) in Sprühdüsenform sind.

4. Fließbett-Reaktor nach irgend einem der Ansprüche 1, 2 und 3, worin der Winkel ($\theta$) der V-Form 25° oder weniger ist.

5. Fließbett-Reaktor nach irgend einem der vorhergehenden Ansprüche, worin ein Neutronen-absorbierendes Material als Wärmeisolator für die Heizeinrichtung verwendet ist.

6. Fließbett-Reaktor nach Anspruch 5, worin das Neutronenabsorbierende Material eine fasrige Borverbindung einschließlich verdichtetem $B^{10}$ aufweist.

7. Fließbett-Reaktor nach irgend einem der vorhergehenden Ansprüche, worin die Absperrungen (8, 9) an ihren unteren Enden mit Hilfsplatten ausgestattet sind, die gehoben oder gesenkt werden können, wodurch die Höhe der Böden der Absperrungen variiert werden können, während die Höhen ihrer oberen Enden konstant gehalten werden.

8. Verfahren zur Herstellung von Urantrioxid und/oder Plutoniumoxid, gekennzeichnet durch (i) Einführen einer wässrigen Lösung von Urannitrat und/oder Plutoniumnitrat in einen Fließbettreaktor (1) durch eine Anzahl von Zufuhrlöchern (3 und/oder 5), wobei das Fließbett von rechtwinkliger, parallelepipedischer Form ist, die der kristischen Sicherheitsform von

$^{235}$Uran und/oder Plutonium genügt, wobei der Reaktor zwei oder mehr Reaktionskammern (10, 11) aufweist, unterteilt durch Absperrungen (8, 9), deren untere Enden zur Steuerung ihrer Höhe bewegbar sind; (ii) Zuführen von Wärme dem Fließbett zum Zersetzen des Nitrats von äußeren und inneren Quellen (A, 14, 15), einschließlich Heißluft (A), durch das Fließbett aufwärts geleitet; und (iii) Überführen der Oxidteilchen von einer Reaktionskammer zur nächsten und schließlich aus dem Reaktor heraus durch Überlauf über die Absperrungen (8, 9).

9. Verfahren nach Anspruch 8, bei dem Urantrioxid erzeugt wird.

**Revendications**

1. Réacteur du type à lit-fluidisé en vue de l'obtention de trioxyde d'uranium ou d'oxyde de plutonium à partir de nitrate d'uranyle et/ou de nitrate de plutonium en solution aqueuse introduit dans le réacteur dans lequel il est décomposé thermiquement pour donner du trioxyde d'uranium et/ou de l'oxyde de plutonium à l'état de poudre laquelle est évacuée du réacteur, le réacteur étant caractérisé par les points suivants:

a) Le lit-fluidisé (1) est conformé selon un volume parallélèpipèdique de section rectangulaire ($W_1$, $W_2$, L) qui répond à la forme critique de sécurité de l'uranium U235 et/ou du plutonium.

b) Il comporte une pluralité d'orifices (3, 5) pour l'alimentation du réacteur en solution aqueuse de nitrate.

c) Il comporte au moins deux chambres de réaction (10, 11) divisées par une ou plusieurs cloisons (8, 9) dont la base est mobile pour ajuster la distance de cette base par rapport au plancher et disposées de façon à permettre l'évacuation de l'oxyde à l'état de poudre depuis les chambres de réaction, principalement par déversement (12) par dessus la partie supérieure de ladite cloison.

d) Des moyens de chauffage (A, 14, 15) à l'intérieur et à l'extérieur du lit-fluidisé.

e) Une évacuation des gaz située à la partie supérieure du réacteur et constituée d'une structure (16) en forme de V divergent vers le haut.

2. Réacteur à lit-fluidisé selon la revendication 1, caractérisé en ce que il comporte une pluralité d'orifices (3,5) pour l'alimentation de la solution aqueuse de nitrate à la fois dans la région concentrée (1) et dans la région diluée (4) du réacteur à lit-fluidisé.

3. Réacteur à lit-fluidisé selon la revendication 2, caractérisé en ce que les orifices d'alimentation en solution aqueuse sont constitués par des buses de pulvérisation.

4. Réacteur à lit-fluidisé selon l'une des revendications 1, 2 ou 3, dans lequel l'angle ($\theta$) de la structure supérieure à section en forme de V est égal ou inférieur à 25°.

5. Réacteur à lit-fluidisé selon l'une des revendications 1 à 4 ci-dessus, caractérisé en ce que un matériau absorbeur de neutrons est utilisé comme isolation thermique associé aux moyens de chauffage (6).

6. Réacteur à lit-fluidisé selon la revendication 5, caractérisé en ce que le matériau absorbeur de neutrons comprend un composé à base de bore à l'état fibreux comportant du bore 10 sous forme condensée.

7. Réacteur à lit-fluidisé selon l'une des revendications 1 à 6 ci-dessus, caractérisé en ce que les cloisons (8, 9) sont associées à des plaques auxiliaires disposées à leur partie inférieure et qui peuvent être élevées ou abaissées permettant ainsi d'ajuster la base du cloisonnement tandis que son niveau supérieur reste constant.

8. Procédé pour la préparation de trioxyde d'uranium et/ou d'oxyde de plutonium, caractérisé par les points suivants:

a) on introduit une solution aqueuse de nitrate d'uranium et/ou de nitrate de plutonium dans un réacteur à lit-fluidisé (1) à travers une pluralité d'orifices d'alimentation (3) et/ou (5) le lit-fluidisé étant en forme de volume parallèlépipèdique de sections rectangulaires conformes à la forme critique de sécurité de l'uranium 235 et/ou du plutonium le réacteur comportant deux au moins chambres de réaction (10, 11) séparées par des cloisonnements (8, 9), dont la base est mobile pour en ajuster le niveau.

b) on provoque la décomposition du nitrate par apport de chaleur depuis des sources externes et internes (A, 14, 15) comportant de l'air chaud A traversant vers le haut le lit-fluidisé.

c) on fait passer les particules d'oxyde d'une chambre de réaction à la suivante et finalement à l'extérieur du réacteur par déversement audessus d'un cloisonnement (8, 9).

9. Procédé selon la revendication 8, caractérisé en ce que on obtient du trioxyde d'uranium.

FIG. 1

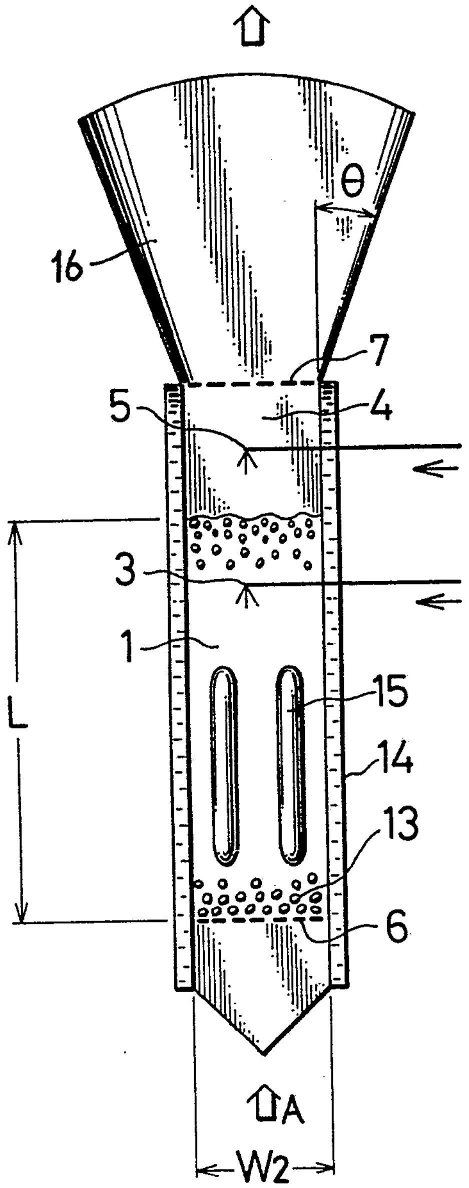

FIG. 2